# EUROPEAN PATENT SPECIFICATION

(11) **EP 2 333 293 B1**
(45) Date of publication and mention of the grant of the patent: **26.12.2012**
(21) Application number: 10190920.8
(22) Date of filing: 11.11.2010
(51) Int. Cl.: F02M 35/10, F02B 27/02, F02D 9/16

(54) **Air intake apparatus for internal combustion engine**
Luftansaugvorrichtung für Verbrennungsmotor
Appareil d'admission d'air pour moteur à combustion interne

(30) Priority: 19.11.2009 JP 2009264331
(43) Date of publication of application: 15.06.2011
(73) Proprietor: AISIN SEIKI KABUSHIKI KAISHA, Kariya-shi, Aichi 448-8650 (JP)
(72) Inventor: Sakagami, Eiji, Kariya-shi Aichi 448-8650 (JP)
(74) Representative: Kramer - Barske - Schmidtchen

(56) References cited:
- EP-A1- 0 701 057
- WO-A1-2008/010590
- DE-A1-102006 009 102

## Description

This disclosure relates to an air intake apparatus for an internal combustion engine. More particularly, the disclosure pertains to an air intake apparatus for an internal combustion engine including a casing that has an intake port and a discharge port and a rotary valve that has a valve element rotatable about a rotational axis within the casing and controlling a connecting state between the intake port and the discharge port.

According to a known air intake apparatus for an internal combustion engine, an inner surface of a casing formed around a rotational axis of a valve element, i.e., the inner surface surrounding a rotation region of the valve element in a direction perpendicular to the rotational axis of the valve element, is formed into a cylindrical shape and is coaxial with the rotational axis of the valve element. An intake port and a discharge port are formed in an opening manner at different portions of the inner surface in a rotating direction of the valve element. Accordingly, the inner surface that extends from the intake port to the discharge port is formed to be an arc surface coaxial with the rotational axis of the valve element. Such air intake apparatus is disclosed in JP2008-8150A (specifically, paragraph 0019 and Fig. 5), for example.

Therefore, according to the air intake apparatus disclosed in JP2008-8150A, a recess void along the arc surface formed coaxially with the rotational axis of the valve element serves as a dead space (i.e., an extra space) in an air intake path from the intake port to the discharge port. Then, a portion of air flowing from the intake port towards the discharge port may enter the recess void, which may lead to an increase of a pressure loss of the air flowing into the discharge port. A flow speed of the air may decrease accordingly. Consequently, an air filling rate, a mixing rate of the air and fuel tends to decrease, which may disturb an increase of an output of an internal combustion engine.

Further air intake apparatus are known from EP 0 701 057 A1 and DE 10 2006 009 102 A1.

A need thus exists for an intake apparatus for an internal combustion engine that can improve an output of an internal combustion engine.

This object is achieved by an air intake apparatus according to claim 1. Further developments are given in the dependent claims.

Accordingly, air from the intake port to the discharge port flows along the inner surface of which a distance from the rotational axis is shorter than the maximum rotational radius of the valve element. That is, the inner surface defined from the intake port to the discharge port achieves a smooth connection between a direction where the air is taken in from the intake port and a direction where the air flows out from the discharge port. A pressure loss of the air flowing towards the discharge port is reduced and a decrease of the flow speed of the air is minimized. Consequently, an air filling rate, a mixing rate of the air and fuel, and the like are prevented from decreasing, which may cause an increase of an output of the internal combustion engine.

The inner surface forming portion may include a surface smoothly connecting a first inner surface of the intake port and a second inner surface of the discharge port.

First and second circular side plates are provided at respective ends of the valve element along the rotational axis, the first and second circular side plates being coaxial with the rotational axis, and the inner surface forming portion is arranged between the first and second circular side plates.

Accordingly, both ends of a rotational void of the valve element in a direction of the rotational axis are defined by plate surfaces of the first and second circular side plates provided at the respective ends of the valve element along the rotational axis and coaxial therewith. Thus, shapes of the respective ends of the rotational void of the valve element along the rotational axis are constant regardless of the rotation of the valve element, thereby stabilizing the airflow from the intake port to the discharge port. In addition, because the inner surface forming portion is arranged between the first and second circular side plates, the inner surface forming portion is prevented from interfering with the rotation of the valve element.

In the case, the inner surface forming portion is integrally formed at the casing, and the casing includes an insertion opening into which the rotary valve is inserted and mounted in a direction perpendicular to the rotational axis and a cover member covering the insertion opening, the rotary valve is inserted in the direction perpendicular to the rotational axis and mounted at the casing where the inner surface forming portion is integrally formed and thereafter the insertion opening of the rotary valve is closed by the cover member. Thus, at the time of mounting the rotary valve to the casing, the mounting of the inner surface forming portion at the casing is not necessary, which leads to a simplified assembling of the rotary valve and the inner surface forming portion. The cover member may partially or fully close the insertion opening of the rotary valve.

In the case, the casing includes an insertion opening into which the rotary valve is inserted and mounted in a direction perpendicular to the rotational axis, and the inner surface forming portion is integrally formed at a cover member covering the insertion opening, the rotary valve is inserted, in the direction perpendicular to the rotational axis, into the inside of the casing where the inner surface forming portion is not provided, i.e., the inner surface forming portion does not disturb the mounting of the rotary valve to the casing. Then, after the rotary valve is mounted at the inside of the casing, the inner surface forming portion is mounted at the same time as when the insertion opening of the rotary valve is closed by the cover member. Consequently, the simplified assembly of the rotary valve and the inner surface forming portion is obtained. At this time, the cover member may partially or fully close the insertion opening of the rotary valve.

The first and second circular side plates may be integrally formed with each other via the valve element.

Thus, the simplified configuration of the rotary valve that is mounted at the inside of the casing so as to be rotatable can be simplified.

Each of the first and second circular side plates may be configured in such a manner that a metallic circular disc is insert-molded by resin to each of the first and second circular side plates.

Thus, the strength of each of the circular side plates can be enhanced by the metallic circular disc so that a torsional rigidity of the rotary valve that is rotatably operated may increase.

The foregoing and additional features and characteristics of this disclosure will become more apparent from the following detailed description considered with the reference to the accompanying drawings, wherein:

Fig. 1 is a cross sectional view illustrating an inside of an air intake apparatus for an internal combustion engine according to a first embodiment disclosed here;

Fig. 2 is a perspective view schematically illustrating a rotary valve mounted at the air intake apparatus for the internal combustion engine;

Fig. 3 is a cross sectional view of a main portion of the rotary valve mounted at a casing of the air intake apparatus for the internal combustion engine;

Fig. 4 is a perspective view of the main portion of the rotary valve;

Fig. 5 is a cross sectional view of the main portion of the rotary valve;

Fig. 6A is a cross sectional view illustrating a method for mounting the rotary valve to the casing;

Fig. 6B is a cross sectional view taken along the line VIB-VIB illustrated in Fig. 6A;

Fig. 7 is a perspective view illustrating the method for mounting the rotary valve to the casing;

Fig. 8 is a cross sectional view illustrating an operation of the rotary valve;

Fig. 9 is a cross sectional view illustrating another operation of the rotary valve;

Fig. 10 is a cross sectional view illustrating still another operation of the rotary valve;

Fig. 11 is a cross sectional view illustrating still another operation of the rotary valve;

Fig. 12A is a cross sectional view illustrating a method for mounting the rotary valve to the casing according to a second embodiment disclosed here; and

Fig. 12B is a cross sectional view of the main portion of the rotary valve mounted at the casing according to the second embodiment.

Embodiment disclosed here will be explained with reference to the attached drawings. An air intake apparatus for an internal combustion engine according to each of the embodiments is applied to a vehicle equipped with a four-cylinder engine that serves as the internal combustion engine, for example. In the embodiment, directions and orientations such as left, right, front, rear, top, and bottom correspond to those when viewed from an occupant of a vehicle equipped with the air intake apparatus for the internal combustion engine.

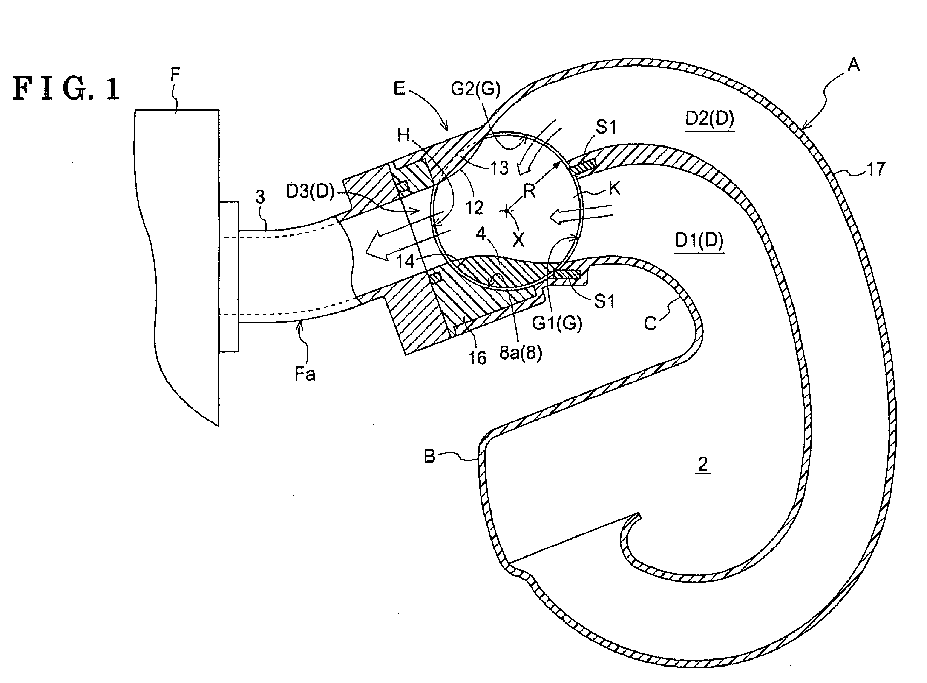

[First embodiment] A first embodiment will be explained as below. As illustrated in Figs. 1 to 3, an air intake apparatus for an internal combustion engine (which will be hereinafter simply referred to as an air intake apparatus) A includes a surge tank B, a casing C, and a rotary valve E. The surge tank B includes an inlet 1 and an air storage void 2. The casing C having a hollow shape includes an air intake passage D, an intake port G and a discharge port H. The rotary valve E is mounted at the casing C.

The surge tank B and the casing C are integrally formed by a connection of resin molded products. A throttle valve is connected to the inlet 1 of the surge tank B so that outside air, of which a volume of airflow is adjusted by the throttle valve, is sucked via the inlet 1 into the air storage void 2.

The air intake passage D is connected to an air intake portion Fa for each of four cylinders of an engine F serving as the internal combustion engine. That is, according to the present embodiment, four of the air intake passages D are individually and respectively connected to four of the cylinders of the engine F. The air intake portion Fa is connected to a cylinder head of the engine F via an intake pipe 3. A fuel injection nozzle is provided at a downstream portion of the intake pipe 3.

Each of the air intake passages D includes a first intake passage D1 having a shorter path length to the surge tank B, a second intake passage D2 having a longer path length to the surge tank B compared to the first intake passage D1, and a third intake passage D3 connected to the air intake portion Fa.

The rotary valve E controls the airflow to the air intake portion Fa from the air intake passage D. The rotary valve E includes a rotor K rotatably driven around a rotational axis X by an electric motor J and an angle sensor 9 detecting a rotational angle of the rotary valve E. The rotor K includes four valve elements 4 mounted at the respective four air intake passages D. The valve elements 4 are made of resin and are rotatable about the rotational axis X within the casing C.

The valve elements 4 are accommodated within bore portions 8 respectively, formed at the casing C. Specifically, four of the bore portions 8 are provided, corresponding to the four air intake passages D. Each of the bore portions 8 includes an inner peripheral surface 8a having substantially a cylindrical shape and being coaxial with the rotational axis X of the valve element 4.

An end portion of the first intake passage D1 (i.e., a portion facing the rotary valve E) serves as a first intake port G1. An end portion of the second intake passage D2 (i.e., a portion facing the rotary valve E) serves as a second intake port G2. A start portion of the third intake passage D3 (i.e., a portion facing the rotary valve E) serves as the discharge port H. All of the ports G1, G2, and H are open at the inner peripheral surface 8a of the bore portion 8 individually.

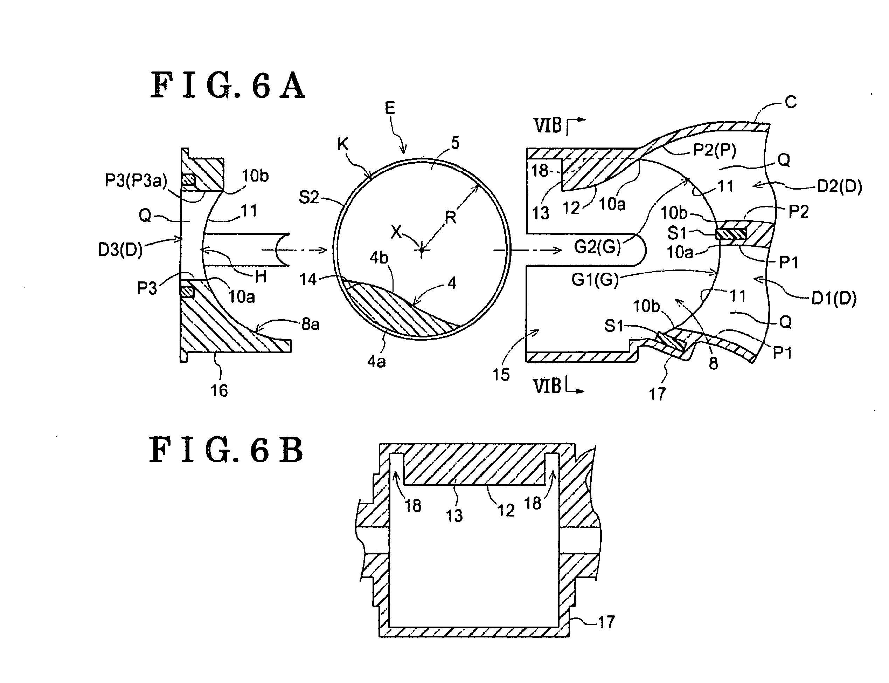

As illustrated in Figs. 6A, 8 to 11, at least the end portion of the first intake passage D1 is formed into a rectangular shape in a lateral cross section surrounded by a pair of first lateral wall surfaces P1 that extends along the rotational axis X and a pair of vertical wall surfaces Q that extends along a direction perpendicular to the rotational axis X. In addition, at least the end portion of the second intake passage D2 is formed into a rectangular shape in a lateral cross section surrounded by a pair of second lateral wall surfaces P2 that extends along the rotational axis X and the pair of vertical wall surfaces Q. Further, at least the start portion of the third intake passage D3 is formed into a rectangular shape in a lateral cross section surrounded by a pair of third lateral wall surfaces P3 that extends along the rotational axis X and the pair of vertical wall surfaces Q. Accordingly, each of the first intake port G1, the second intake port G2, and the discharge port H opens in a rectangular shape surrounded by a pair of lateral edges 10a and 10b that extends along the rotational axis X and a pair of vertical edges 11 that extends along the direction perpendicular to the rotational axis X.

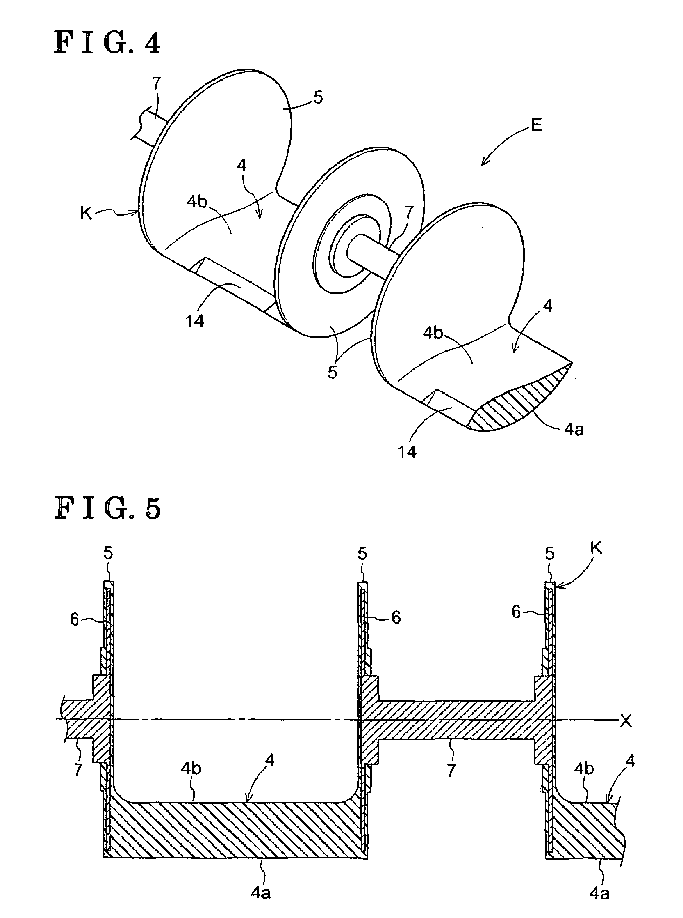

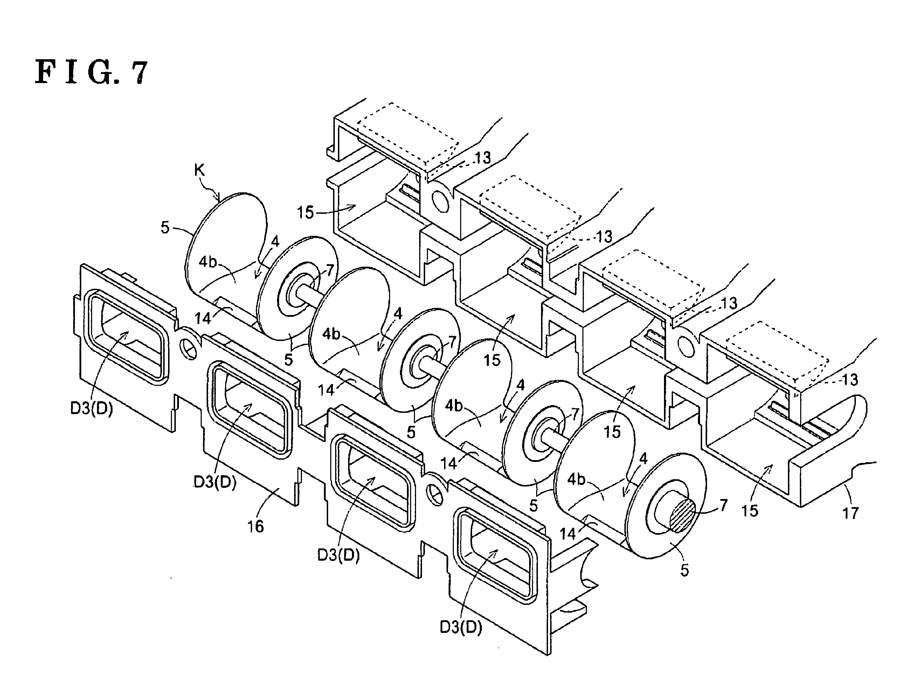

Each of the valve elements 4 rotates about the rotational axis X to thereby control or adjust a connection state between the intake port G (G1, G2) and the discharge port H. As illustrated in Figs. 6A, 8 to 11, the valve element 4 includes an outer peripheral surface 4a having an arc surface facing the inner peripheral surface 8a of the bore portion 8, an inner peripheral surface 4b having a curved surface so as to smoothly connect the lateral wall surface P1 of the first intake passage D1 and the lateral wall surface P3 of the discharge port H while the valve element 4 is rotatably moving between the first intake port G1 and the discharge port H. The valve element 4 is formed into a rectangular shape in a plan view (see Fig. 4). A cut portion 14 having a wide width is formed substantially at a center of the valve element 4 along the rotational axis X thereof. Specifically, the cut portion 14 is formed at an edge portion of the valve element 4 in a direction where the air flows out as illustrated in Figs. 4 and 7.

As illustrated in Figs. 4 and 5, each of the valve elements 4 is provided with a pair of circular side plates 5 serving as first and second circular side plates. Specifically, the pair of circular side plates 5, having flat facing surfaces, is provided at respective ends of the valve element 4 along the rotational axis X so as to be coaxial with the rotational axis X.

As illustrated in Fig. 5, the pair of circular side plates 5 is integrally formed with the valve element 4 in such a manner that a metallic circular disc 6 such as a steel plate is insert-molded to each of the circular side plates 5 by resin. The pair of circular side plates 5 is integrally formed only by means of the valve element 4.

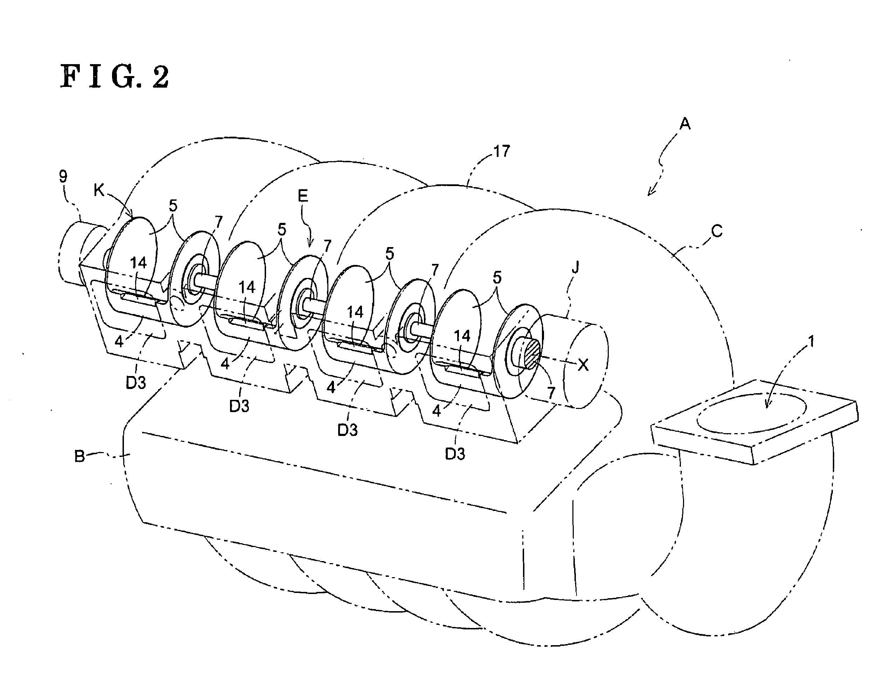

The circular side plates 5 provided at the respective valve elements 4 adjacent to each other are connected by means of a connection shaft 7 as illustrated in Fig. 2 so that the four valve elements 4 are supported in a integrally rotatable manner about the rotational axis X. The connection shaft 7 may be a metallic member integrally formed with the metallic circular discs 6 that are insert-molded to the respective circular side plates 5 or may be a resin member integrally formed with resin portions covering the metallic circular discs 6.

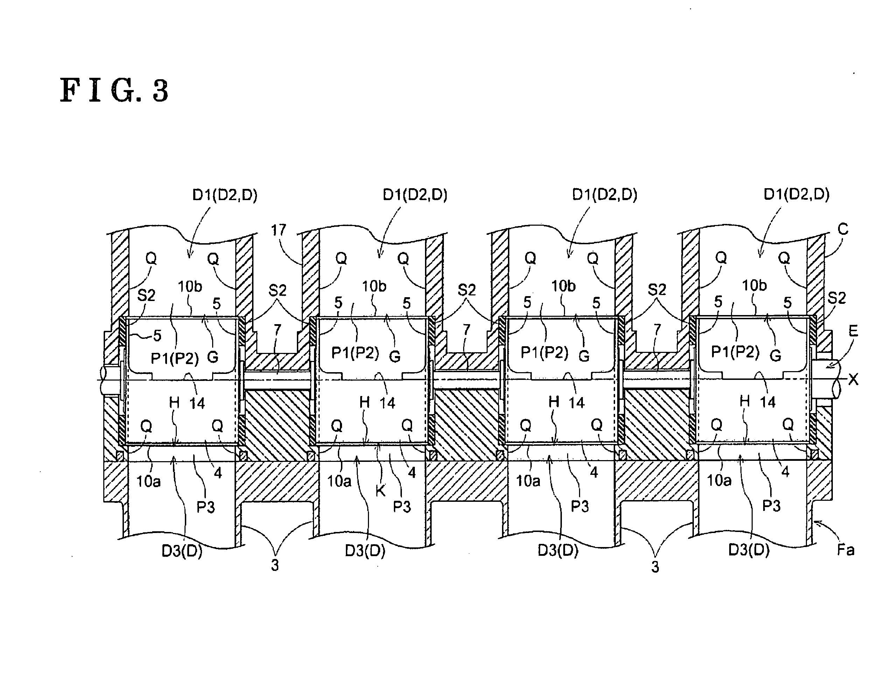

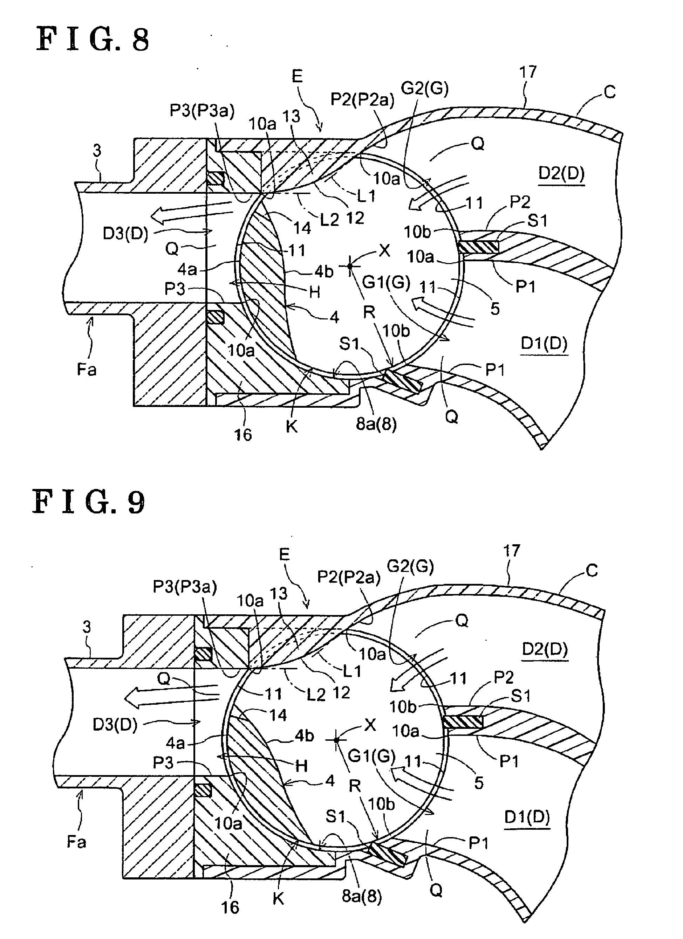

As illustrated in Figs. 8 to 11, a seal member S1 is provided to seal a gap between the casing C (specifically, the first intake port G1) and each of the valve elements 4 that closes the first intake port G1. In addition, seal members S2 are provided between the respective circular side plates 5 and the casing C as illustrated in Fig. 3 so that the adjacent bore portions 8 are prevented from being connected to one another.

An inner surface of the casing C, which extends from the second intake port G2 to the discharge port H, along the rotational axis X of the valve element 4, serves as an inner peripheral surface 12 (inner surface) that is a portion of an inner peripheral surface 8a of the bore portion 8 and that is disposed between the second intake port G2 and the discharge port H. The inner peripheral surface 12 is constituted by an inner surface forming portion 13 that forms a curved surface (surface), of which a distance from the rotational axis X is shorter than a maximum rotational radius R (a rotational radius) of the valve element 4 and which is integrally formed at the casing C.

That is, as illustrated in Figs. 8 to 11, the inner peripheral surface 12 of the bore portion 8 defined between the second intake port G2 and the discharge port H has the curved surface protruding towards the rotational axis X to thereby obtain the inner surface forming portion 13. As a result, facing lateral wall surfaces P2a and P3a of the lateral wall surfaces P2 and P3 adjacent to each other via the bore portion 8 and serving as first and second inner surfaces are smoothly connected to each other by means of the inner surface forming portion 13. The inner surface forming portion 13 is provided between the pair of circular side plates 5.

The inner peripheral surface 12 having the curved surface is connected to the facing lateral wall surface P2a (i.e., the first inner surface) along a tangent line L1 of the facing lateral surface P2a of the second intake passage D2 at the second intake port G2. In addition, the inner peripheral surface 12 is connected to the facing lateral wall surface P3a (i.e., the second inner surface) along a tangent line L2 of the facing lateral wall surface P3a of the third intake passage D3 at the discharge port H. In the aforementioned manner, the inner peripheral surface 12 is formed into the curved surface shape protruding towards the rotational axis X.

As illustrated in Figs. 6 and 7, the casing C includes an insertion opening 15 into which the rotary valve E is inserted and mounted in a direction perpendicular to the rotational axis X and a cover member 16 covering the insertion opening 15.

That is, the casing C includes a body portion 17 where the insertion opening 15 is formed and the cover member 16 where each of the discharge ports H is provided. Each of the inner surface forming portions 13 is formed at the body portion 17 to constitute the inner peripheral surface12.

Then, as illustrated in Figs. 6 and 7, the rotary valve E is inserted through the insertion opening 15 in the direction perpendicular to the rotational axis X and is mounted at the inside of the body portion 17 so that each of the pairs of the circular side plates 5 is positioned in a void 18 defined between the inner surface forming portion 13 and the body portion 17. Then, the insertion opening 15 is covered by the cover member 16 that is thereafter laser-welded to the body portion 17.

Figs. 8 to 11 illustrate rotational positions of the valve element 4 in response to the rotational speed of the engine F (i.e., the number of rotations of the engine F). In a case of an idling rotation of the engine F, the rotational position of the rotor K is determined as illustrated in Fig. 8 so that the valve element 4 is arranged in a position where the air intake is achieved via the cut portion 14 while an area of the opening of the discharge port H is substantially fully closed by the valve element 4. Accordingly, the small volume of air intake through the cut portion 14 achieves the relatively high-speed air intake at respective upper ranges of the discharge port H and the air intake portion Fa, which is caused by the cut portion 14 that collects the airflow substantially towards the center of the air intake passage D. A tumble flow is generated at the cylinder to thereby mix the air and fuel promptly or sufficiently, which leads to an appropriate combustion of the engine F.

In a case of an extremely low speed rotation of the engine F, the rotational position of the rotor K is determined as illustrated in Fig. 9. That is, the valve element 4 is arranged at a position where an upper end of the valve element 4 is slightly displaced downward relative to the discharge port H while the area of the opening of the discharge port H is mostly closed by the valve element 4. The air is supplied to a combustion chamber of the engine F via a void formed at an upper portion of the valve element 4. At a time of such air intake, the tumble flow is generated within the cylinder of the engine F so as to promote the mixture of the air and the fuel supplied from the fuel injection nozzle. As a result, the appropriate combustion is obtained.

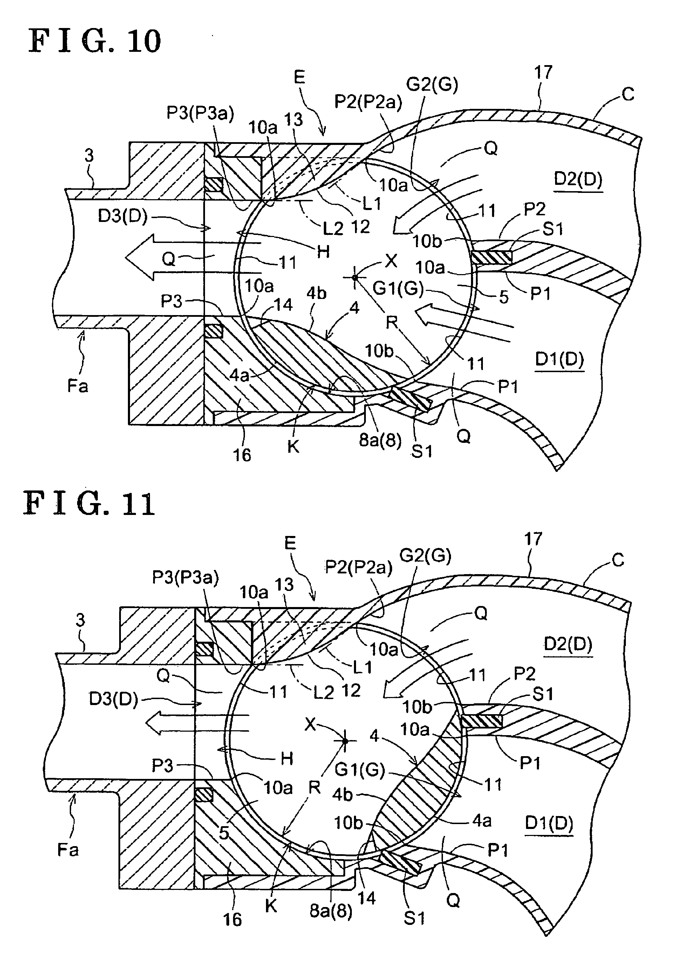

In a case of a low speed rotation of the engine F, the rotational position of the rotor K is determined as illustrated in Fig. 10. That is, the valve element 4 is arranged at a position where the valve element 4 is prevented from interfering with any ports H, G1, and G2. Accordingly, the air taken in from both of the first and second intake ports G1 and G2 is supplied to the air intake portion Fa.

In a case of a medium speed rotation of the engine F, the rotational position of the rotor K is determined as illustrated in Fig. 11. That is, the rotor K is arranged in a position to close the opening of the first intake port G1. Accordingly, the air taken in only from the second intake port G2 is supplied to the combustion chamber of the engine F. At the time of the medium speed rotation of the engine F, the most effective inertia supercharging utilizing a dynamic inertia of air is achieved.

In a case of a high speed rotation of the engine F, the rotational position of the rotor K is determined as illustrated in Fig. 10 in the same way as the case of the low speed rotation of the engine F. That is, the valve element 4 is arranged at the position where the valve element 4 is prevented from interfering with any ports G1, G2, and H. Accordingly, the air taken in from both the ports G1 and G2 is supplied to the air intake portion Fa.

In order to smoothly connect the facing lateral wall surfaces P2a and P3a of the second and third intake passages D2 and D3 adjacent to each other via the bore portion 8, the inner peripheral surface 12 of the bore portion 8 defined between the second intake port G2 and the discharge port H is formed into the curved surface projecting towards the rotational axis X. As a result, a dead space of the bore portion 8, where a portion of the air flowing towards the discharge port H from the intake port G may enter, is reduced to thereby restrain a pressure loss of the air flowing to the discharge port H and a decrease of the flow speed of the air. Accordingly, regardless of any rotations (i.e., any rotational positions) of the rotor K, the pressure loss of the air may be reduced.

The control of rotating each of the valve elements 4 in response to the number of rotations of the engine F is achieved by the control of the electric motor J based on the number of rotations of the engine F. In such control, the rotor K is controlled to rotate in the forward direction (i.e., a counterclockwise rotation in Figs. 8 to 11) in cases of the shifting from the idling rotation to the extremely low speed rotation of the engine F, the shifting from the extremely low speed rotation to the low speed rotation of the engine F, and the shifting from the low speed rotation to the medium speed rotation of the engine F. In addition, the rotor K is controlled to rotate in the reverse direction (i.e., a clockwise rotation in Figs. 8 to 11) in the case of the shifting from the medium speed rotation to the high speed rotation of the engine F.

### [Second embodiment]

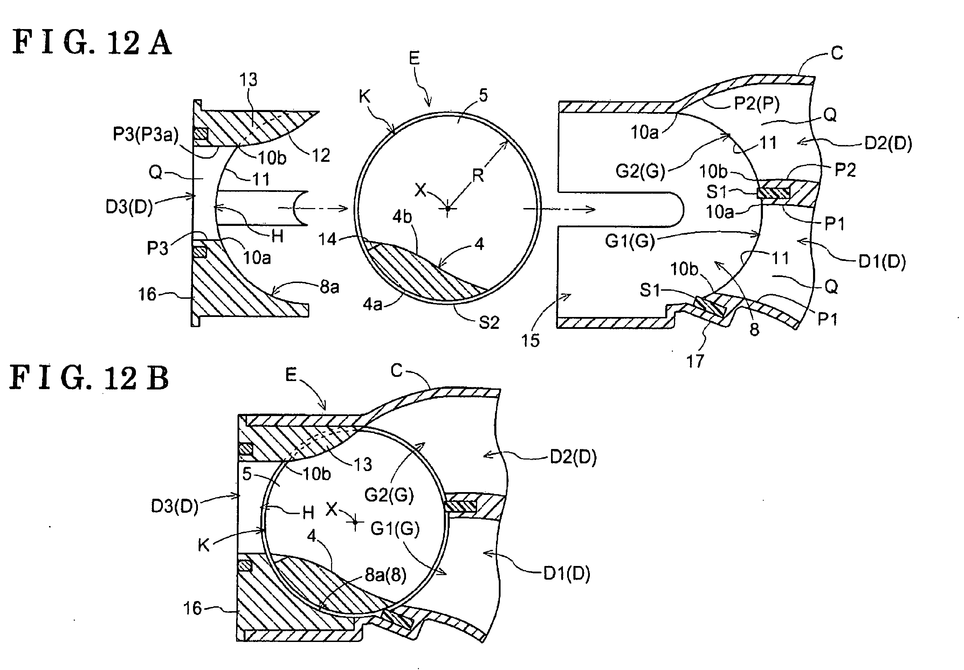

A second embodiment will be explained with reference to Figs. 12A and 12B. In the second embodiment, the casing C is constituted by the body portion 17 and the cover member 16 where each of the discharge ports H is provided. The insertion bore 15 into which the rotary valve E is inserted and mounted in the direction perpendicular to the rotational axis X is formed at the body portion 17. Each of the inner surface forming portions 13 is provided at the cover member 16, instead of the body portion 17, to thereby form the inner peripheral surface 12 according to the second embodiment.

Accordingly, in a case of mounting the rotary valve E to the body portion 17, the rotary valve E is inserted through the insertion opening 15 in the direction perpendicular to the rotational axis X and is mounted at the inside of the body portion 17 as illustrated in Fig. 12A. Then, as illustrated in Fig. 12B, at a time when the insertion opening 15 is covered by the cover member 16, each of the inner surface forming portions 13 is mounted at the casing C at the same time. Other structures of the second embodiment are the same as those of the first embodiment.

### [Other embodiments]

The inner surface of the casing C, which extends from the second intake port G2 to the discharge port H, along the rotational axis X of the valve element 4, may be formed by the inner surface forming portion 13, of which a distance from the rotational axis X is shorter than the maximum rotational radius R of the valve element 4 and which has a flat surface. In addition, the inner surface of the casing C, which extends from the second intake port G2 to the discharge port H, along the rotational axis X of the valve element 4, may be formed by the inner surface forming portion 13, of which a distance from the rotational axis X is shorter than the maximum rotational radius R of the valve element 4 and which has a curved surface dented in a direction away from the rotational axis X. Further, the inner surface of the casing C, which extends from the second intake port G2 to the discharge port H, along the rotational axis X of the valve element 4, may be formed by the inner surface forming portion 13, of which a distance from the rotational axis X is shorter than the maximum rotational radius R of the valve element 4 and which has a curved surface dented in a direction away from the rotational axis X and a curved surface protruding towards the rotational axis X, both of the curved surfaces being smoothly connected to each other. That is, the inner surface of the casing C defined from the intake port G2 to the discharge port H may be formed into any shape as long as the air flowing and taken from the intake port G2 smoothly flows into the discharge port H. Therefore, the shape of the inner peripheral surface 12 of the casing C defined from the intake port G to the discharge port H may be appropriately specified depending on a connecting angle of each of the intake passages D1, D2, and D3 relative to the bore portion 8, a cross-section area of each of the intake passages D1, D2, and D3, and the like.

## Claims

1. An air intake apparatus for an internal combustion engine (A), comprising:
a casing (C) including an intake port (G) and a discharge port (H);
a rotary valve (E) rotatable around a rotational axis (X) within the casing (C) and including a valve element (4) that controls a connecting state between the intake port (G) and the discharge port (H); and
an inner surface forming portion (13) formed at an inner surface (12) of the casing (C) along the rotational axis (X) of the rotary valve (E) and defined from the intake port (G) to the discharge port (H), a distance of the inner surface (12) from the rotational axis (X) being shorter than a maximum rotational radius (R) of the valve element (4),
**characterized in that**
first and second circular side plates (5) are provided at respective ends of the valve element (4) along the rotational axis (X), the first and second circular side plates (5) being coaxial with the rotational axis (X), and the inner surface forming portion (13) is arranged between the first and second circular side plates (5).

2. The air intake apparatus (A) according to claim 1, wherein the inner surface forming portion (13) includes a surface smoothly connecting a first inner surface (P2a) of the intake port (G2) and a second inner surface (P3a) of the discharge port (H).

3. The air intake apparatus (A) according to claim 1, wherein the inner surface forming portion (13) is integrally formed at the casing (C), and the casing (C) includes an insertion opening (15) into which the rotary valve (E) is inserted and mounted in a direction perpendicular to the rotational axis (X) and a cover member (16) covering the insertion opening (15).

4. The air intake apparatus (A) according to claim 1, wherein the casing (C) includes an insertion opening (15) into which the rotary valve (E) is inserted and mounted in a direction perpendicular to the rotational axis (X), and the inner surface forming portion (13) is integrally formed at a cover member (16) covering the insertion opening (15).

5. The air intake apparatus (A) according to any one of claims 1 to 4, wherein the first and second circular side plates (5) are integrally formed with each other via the valve element (4).

6. The air intake apparatus (A) according to any one of claims 1 to 4, wherein each of the first and second circular side plates (5) is configured in such a manner that a metallic circular disc (6) is insert-molded by resin to each of the first and second circular side plates (5).

## Patentansprüche

1. Lufteinlassvorrichtung für einen Verbrennungsmotor (A), mit:
einem Gehäuse (C), das eine Einlassöffnung (G) und eine Austrittsöffnung (H) aufweist,
einem Drehventil (E), das um eine Drehachse (X) in dem Gehäuse (C) drehbar ist und ein Ventilelement (4) aufweist, das einen Verbindungszustand zwischen der Einlassöffnung (G) und der Austrittsöffnung (H) steuert, und
einem Innenflächeausbildebereich (13), der an einer Innenfläche (12) des Gehäuses (C) entlang der Drehachse (X) des Drehventils (E) ausgebildet und von der Einlassöffnung (G) zu der Auslassöffnung (H) definiert ist, wobei ein Abstand der Innenfläche (12) von der Drehachse (X) kürzer als ein maximaler Drehradius (R) des Ventilelements (4) ist,
**dadurch gekennzeichnet, dass**
erste und zweite kreisförmige Seitenplatten (5) an jeweiligen Enden des Ventilelements (4) entlang der Drehachse (X) vorhanden sind, die ersten und zweiten kreisförmigen Seitenplatten (5) koaxial mit der Drehachse (X) sind und der Innenflächeausbildebereich (13) zwischen den ersten und zweiten kreisförmigen Seitenplatten (5) angeordnet ist.

2. Lufteinlassvorrichtung (A) nach Anspruch 1, bei der der Innenflächeausbildebereich (13) eine Fläche aufweist, die eine erste Innenfläche (P2a) der Einlassöffnung (G2) und eine zweite Innenfläche (P3a) der Auslassöffnung (H) weich verbindet.

3. Lufteinlassvorrichtung (A) nach Anspruch 1, bei der der Innenflächeausbildebereich (13) integral an dem Gehäuse (C) ausgebildet ist und das Gehäuse (C) eine Einsetzöffnung (15), in die das Drehventil (E) in einer Richtung senkrecht zu der Drehachse (X) eingesetzt und eingebaut ist, und ein Abdeckbauteil (16), das die Einsetzöffnung (15) abdeckt, aufweist.

4. Lufteinlassvorrichtung (A) nach Anspruch 1, bei der das Gehäuse (C) eine Einsetzöffnung (15) aufweist, in die das Drehventil (E) in einer Richtung senkrecht zu der Drehachse (X) eingesetzt und eingebaut ist, und der Innenflächeausbildebereich (13) integral an einem Deckelbauteil (16), das die Einsetzöffnung (15) abdeckt, ausgebildet ist.

5. Lufteinlassvorrichtung (A) nach einem der Ansprüche 1 bis 4, bei der die ersten und zweiten kreisförmigen Seitenplatten (5) integral miteinander über das Ventilelement (4) ausgebildet sind.

6. Lufteinlassvorrichtung (A) nach einem der Ansprüche 1 bis 4, bei der jede der ersten und zweiten kreisförmigen Seitenplatten (5) so aufgebaut ist, dass eine metallische kreisförmige Scheibe (6) durch Umspritztechnik durch Kunstharz zu jeder der ersten und zweiten kreisförmigen Seitenplatten (5) hergestellt wird.

## Revendications

1. Appareil d'admission d'air pour un moteur à combustion interne (A), comprenant :
un boîtier (C) comprenant un orifice d'admission (G) et un orifice de décharge (H) ;
un soupape rotative (E) qui peut tourner autour d'un axe de rotation (X) à l'intérieur du boîtier (C) et comprenant un élément de soupape (4) qui commande un état de raccordement entre l'orifice d'admission (G) et l'orifice de décharge (H) ; et
une partie formatrice de surface interne (13) qui est formée sur une surface interne (12) du boîtier (C) le long de l'axe de rotation (X) de la soupape rotative (E) et définie entre l'orifice d'admission (G) et l'orifice de décharge (H), une distance de la surface interne (12) depuis l'axe de rotation (X) étant plus courte qu'un rayon de rotation maximal (R) de l'élément de soupape (4),
**caractérisé en ce que** des première et seconde plaques latérales circulaires (5) sont prévues aux extrémités respectives de l'élément de soupape (4) le long de l'axe de rotation (X), les première et seconde plaques latérales circulaires (5) étant coaxiales avec l'axe de rotation (X) et la partie formatrice de surface interne (13) est aménagée entre les première et seconde plaques latérales circulaires (5).

2. Appareil d'admission d'air (A) selon la revendication 1, dans lequel la partie formatrice de surface interne (13) comprend une surface raccordant uniformément une première surface interne (P2a) de l'orifice d'admission (G2) et une seconde surface interne (P3a) de l'orifice de décharge (H).

3. Appareil d'admission d'air (A) selon la revendication 1, dans lequel la partie formatrice de surface interne (13) est formée d'une seule pièce sur le boîtier (C) et le boîtier (C) comprend une ouverture d'insertion (15), dans laquelle la soupape rotative (E) est insérée et montée dans une direction perpendiculaire à l'axe de rotation (X) et un élément de couverture (16) recouvrant l'ouverture d'insertion (15).

4. Appareil d'admission d'air (A) selon la revendication 1, dans lequel le boîtier (C) comprend une ouverture d'insertion (15) dans laquelle la soupape rotative (E) est insérée et montée dans une direction perpendiculaire à l'axe de rotation (X) et la partie formatrice de surface interne (13) est formée d'une seule pièce sur un élément de couverture (16) recouvrant l'ouverture d'insertion (15).

5. Appareil d'admission d'air (A) selon l'une quelconque des revendications 1 à 4, dans lequel les première et seconde plaques latérales circulaires (5) sont formées d'une seule pièce l'une avec l'autre via l'élément de soupape (4).

6. Appareil d'admission d'air (A) selon l'une quelconque des revendications 1 à 4, dans lequel chacune des première et seconde plaques latérales circulaires (5) est configurée de manière qu'un disque métallique circulaire (6) soit moulé par insertion par de la résine sur chacune des première et seconde plaques latérales circulaires (5).
